# FASCICULE DE BREVET EUROPEEN

(11) **EP 1 109 702 B1**
(45) Date de publication et mention de la délivrance du brevet: **24.09.2003**
(21) Numéro de dépôt: 00949630.8
(22) Date de dépôt: 04.07.2000
(51) Int. Cl.: B60R 19/18

(54) **POUTRE DE PARE-CHOCS POUR VEHICULES AUTOMOBILES**
KRAFTFAHRZEUGSTOSSSTANGENTRÄGER
BUMPER BEAM FOR MOTOR VEHICLES

(30) Priorité: 05.07.1999 FR 9908651
(43) Date de publication de la demande: 27.06.2001
(73) Titulaire: Peugeot Citroen Automobiles SA, 92200 Neuilly sur Seine (FR); RECHERCHE ET DEVELOPPEMENT DU GROUPE COCKERILL SAMBRE, 4000 Liège (BE)
(72) Inventeur: CAMPANELLA, Thierry, F-91160 Longjumeau (FR); KERGEN, Richard, B-4347 Fexhe-le-Haut-Clocher (BE); MAGAIN, Pascal, B-6470 Montbliart (BE)
(74) Mandataire: Lanceplaine, Jean-Claude
(86) Numéro de dépôt international: FR0001915
(87) Numéro de publication internationale: WO01002218

(56) Documents cités:
- DE-A- 19 545 069
- FR-A- 2 766 437
- US-A- 4 227 593
- US-A- 5 201 912
- PATENT ABSTRACTS OF JAPAN vol. 1995, no. 09, 31 octobre 1995 (1995-10-31) & JP 07 164983 A (TOYOTA MOTOR CORP), 27 juin 1995 (1995-06-27)

## Description

La présente invention a pour objet une poutre de pare-chocs pour véhicules automobiles selon les caractéristiques du préambule de la revendication 1 connues du FR-A-2766437.

Les constructeurs automobiles ont pour soucis d'améliorer la sécurité des passagers et de réduire les coûts de réparation des véhicules en cas de chocs, tout en évitant une augmentation sensible du poids de ces véhicules.

Pour la sécurité notamment lors d'un choc frontal, les constructeurs optimisent les différentes parties du véhicule de façon à garantir un maximum d'absorption d'énergie cinétique par déformation mécanique des zones éloignées de l'habitacle et à renforcer l'habitacle de façon à préserver les passagers.

Pour la réparation des éléments du véhicule endommagés après un choc frontal, les constructeurs cherchent d'abord à relever aussi haut que possible la vitesse à laquelle des dégâts irréversibles apparaissent, cette vitesse étant de l'ordre de 5km/h, et ensuite à limiter les dommages aux extrémités du véhicule, c'est à dire à des zones facilement réparables, jusqu'à des vitesses de l'ordre de 15km/h.

L'objectif de sécurité est généralement obtenu en dotant le véhicule de longerons dont la déformation progressive des extrémités absorbe l'énergie cinétique du véhicule, les zones des longerons situées près de l'habitacle et l'habitacle lui même étant conçus de façon à être très peu déformable.

Mais, étant donné l'encombrement limité des véhicules, les constructeurs sont amenés à développer des structures garantissant un bon niveau d'absorption d'énergie depuis l'extrémité du véhicule jusqu'à la zone indéformable, tout en évitant des zones mortes, c'est à dire des zones qui ne peuvent se déformer axialement en absorbant un travail de déformation important.

Par ailleurs, les constructeurs ont réduit les coûts des réparations lors de chocs à faible vitesse en modifiant les pare-chocs ou les boucliers des véhicules et notamment en renforçant la poutre des pare-chocs et en intercalant, entre cette poutre et les longerons, des éléments mécaniques déformables appelés absorbeurs d'énergie qui sont conçus pour s'écraser sous un effort sensiblement inférieur à celui de la déformation des longerons.

En cas de choc à faible vitesse, il suffit donc de remplacer un nombre limité de pièces ce qui limite les coûts de réparation.

La réparation est également améliorée en renforçant la poutre du pare-chocs pour relever la vitesse de choc sans dégât et pour garantir une bonne répartition des efforts lors d'un choc à plus haute vitesse.

En effet, le pare-chocs doit transmettre les efforts aux absorbeurs d'énergie, puis aux longerons du véhicule dans les phases ultérieures du choc.

Le fonctionnement de cette structure constituée par la poutre du pare-chocs et les absorbeurs d'énergie doit également présenter une excellente stabilité vis à vis d'angles d'impact plus ou moins inclinés par rapport à l'axe longitudinal du véhicule.

Pour essayer de satisfaire à ces critères, de nombreuses solutions ont été mises en oeuvre jusqu'à présent, mais elles entraînent une augmentation sensible du poids du véhicule ainsi que des coûts.

Une des solutions connues consiste à disposer des lames en acier dans des pare-chocs réalisés en matière synthétique et à incorporer des absorbeurs d'énergie entre le pare-chocs et les longerons du véhicule. Mais les absorbeurs d'énergie utilisés jusqu'à présent ne donnent pas toujours satisfaction et ils impliquent l'ajout de pièces supplémentaires ce qui augmente le poids du véhicule.

Pour éviter cet inconvénient, on connaît des absorbeurs d'énergie réalisés en aluminium qui permettent de diminuer le poids, mais leurs propriétés d'absorption d'énergie sont généralement peu contrôlables et souvent insuffisantes, tandis que les coûts de matière et de fabrication de tels absorbeurs restent importants.

On connaît également des absorbeurs d'énergie réalisés en acier présentant une géométrie relativement complexe qui remplissent les critères de sécurité et permettent de diminuer légèrement le poids. Mais leur coût de fabrication reste aussi très important.

L'invention a pour but d'éviter ces inconvénients en proposant une poutre de pare-chocs pour véhicules automobiles qui permet, en même temps, d'augmenter les critères d'absorption d'énergie et de réduire aussi bien les coûts de réparation dans le cas d'un choc à faible vitesse et le poids du véhicule.

L'invention a donc pour objet une poutre de pare-chocs pour véhicules automobiles comprenant une semelle avant et une semelle arrière verticales et réalisées en au moins un matériau métallique, et au moins une âme réalisée en matériau métallique et disposée entre les deux semelles, caractérisée en ce qu'elle comprend à chaque extrémité de ladite âme, un absorbeur d'énergie formé par un corps creux en matériau métallique, s'étendant perpendiculairement aux semelles et relié à au moins ladite semelle avant ou à ladite âme, les matériaux métalliques de cette âme et du corps creux des absorbeurs d'énergie présentant un rapport entre la limite élastique et la charge à la rupture inférieur à celui du matériau métallique desdites semelles et inférieur à 0,9.

Selon d'autres caractéristiques préférentielles de l'invention :
- le matériau métallique des semelles est un acier présentant une limite élastique très élevée, supérieure à 400 MPa ou un aluminium présentant une limite élastique très élevée supérieure à 250 MPa,
- les semelles sont réalisées en un matériau métallique identique et présentent des épaisseurs différentes,
- le matériau métallique de la semelle avant présente un rapport entre la limite élastique et la charge à la rupture inférieur à celui du matériau métallique de la semelle arrière,
- la poutre de pare-chocs comporte deux âmes parallèles et s'étendant entre lesdites semelles,
- les épaisseurs des semelles et des âmes sont différentes et de préférence l'épaisseur des semelles est supérieure à celle des âmes,
- ladite âme comporte une succession de parties en saillie en creux alternées et s'étend perpendiculairement à l'axe longitudinal de cette âme,
- la distance entre le sommet des parties en saillie et le fond des parties en creux de ladite âme est comprise entre 1/20^{ème} et la moitié de la périodicité des parties en saillie ou en creux,
- la distance entre le fond des parties en creux des deux âmes est comprise entre 0 et la moitié de la périodicité desdites parties en saillie ou en creux,
- le corps creux de chaque absorbeur d'énergie présente une section transversale en forme de croix à quatre branches s'étendant deux par deux dans le prolongement l'une de l'autre et formant entre elles un angle de 90°.

D'autres caractéristiques et avantages de l'invention apparaîtront au cours de la description qui va suivre, donnée uniquement à titre d'exemple et faite en référence aux dessins annexés, sur lesquels :
- la Fig. 1 est une vue schématique d'un pare-chocs avant d'un véhicule automobile muni d'une poutre conforme à l'invention,
- la Fig. 2 est une vue schématique en perspective de la poutre du pare-chocs, conforme à l'invention,
- la Fig. 3 est une vue schématique en perspective éclatée de la poutre du pare-chocs, conforme à l'invention,
- la Fig. 4 est une vue schématique en perspective de la partie centrale de la poutre du pare-chocs, conforme à l'invention,
- la Fig. 5 est une vue schématique en coupe transversale d'un absorbeur d'énergie de la poutre du pare-chocs, conforme à l'invention,
- la Fig. 6 est une vue schématique en perspective d'un autre mode de réalisation de la poutre du pare-chocs, conforme à l'invention.

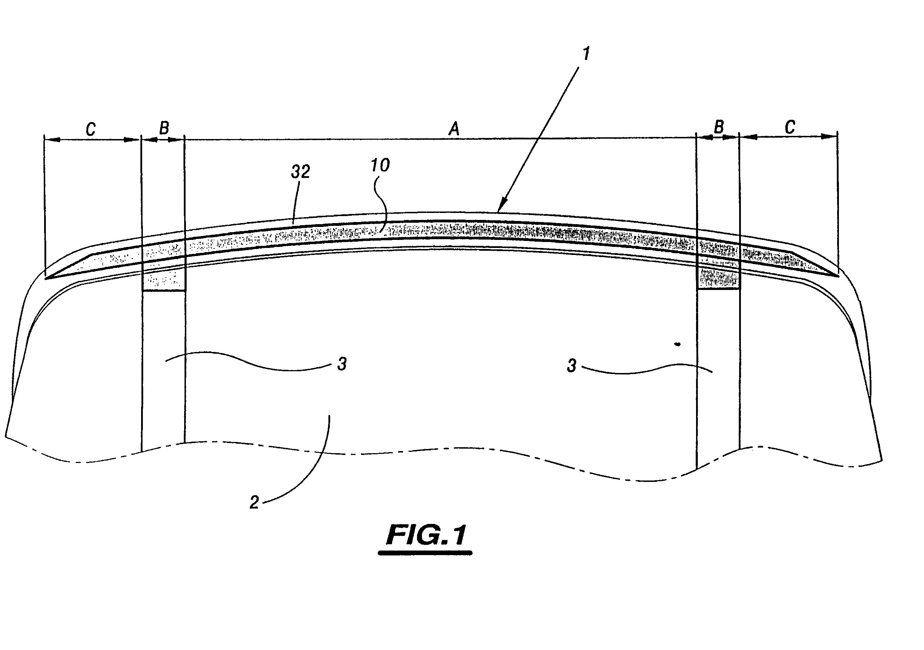

Sur la Fig. 1, on a représenté schématiquement un pare-chocs désigné dans son ensemble par la référence 1 qui, dans l'exemple de réalisation représenté sur cette figure, est monté à l'avant d'un véhicule automobile 2 par l'intermédiaire de deux longerons 3 parallèles et s'étendant perpendiculairement audit pare-chocs 1.

Ce pare-chocs 1 peut également être monté à l'arrière du véhicule automobile.

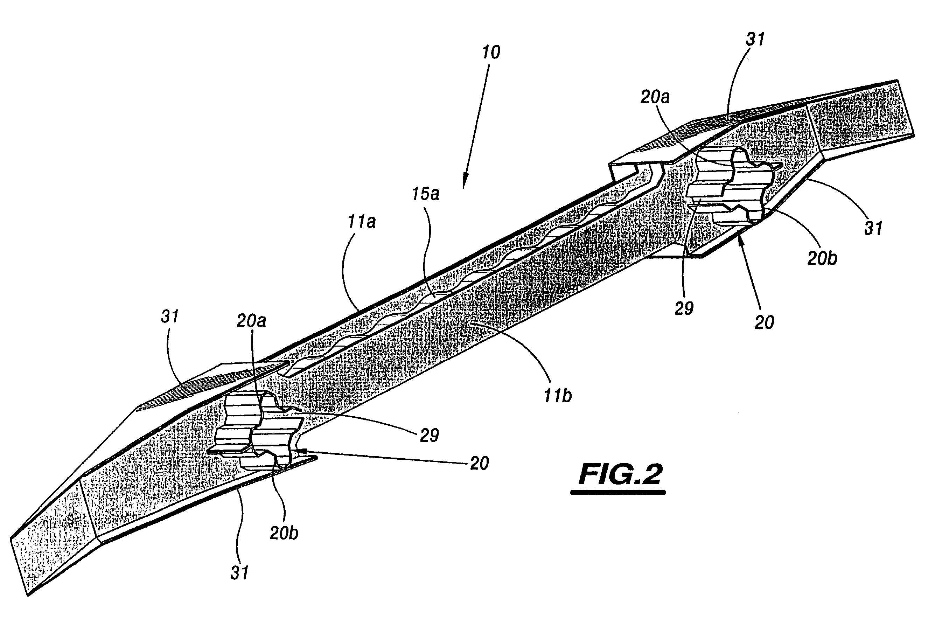

Ainsi que représenté sur les Figs. 1 et 2, le pare-chocs 1 est formé par une poutre 10 qui comprend une zone centrale A constituant une traverse, deux zones latérales B constituant chacune un absorbeur d'énergie et disposées chacune de part et d'autre de la zone centrale A et deux zones d'extrémité C constituant une protection des coins latéraux du véhicule automobile 2.

La zone centrale A de la poutre 10 assure essentiellement une fonction de préservation du véhicule automobile 2 sans dégât apparent pour des chocs à faible vitesse et également une fonction de répartition et de transmission des efforts de contact aux zones latérales B et ensuite aux longerons 3 pour les chocs à plus haute vitesse par l'intermédiaire desdites zones latérales B constituant chacune un absorbeur d'énergie, comme on le verra ultérieurement.

D'une manière générale, la poutre 10 est réalisée à partir d'au moins deux matériaux métalliques distincts par leur nature, leurs propriétés mécaniques ou par leur épaisseur.

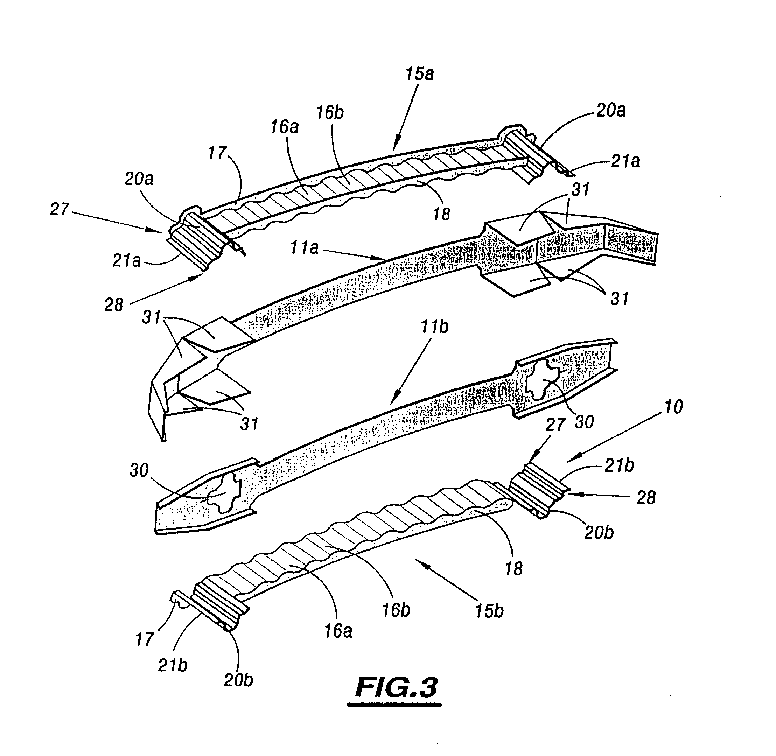

Ainsi que représenté notamment aux Figs 2 et 3, la poutre 10 comprend deux semelles verticales et longitudinales, respectivement une semelle avant 11a et une semelle arrière 11b, réalisées en au moins un matériau métallique qui présente une très haute limite élastique, comme par exemple un acier présentant une limite élastique supérieure à 400 MPa et de préférence entre 1000 et 1500 Mpa ou un aluminium présentant une limite élastique supérieure à 250 MPa.

Les semelles 11a et 11b ménagent entre elles un espace dans lequel est intercalée au moins une âme 15a ou 15b. De préférence deux âmes, respectivement une âme supérieure 15a et une âme inférieure 15b, sont intercalées entre les deux semelles et sont disposées horizontalement et parallèlement l'une par rapport à l'autre.

Dans ce qui suit, la description sera faite par rapport à un mode de réalisation avec deux âmes 15a et 15b s'étendant parallèlement l'une par rapport à l'autre.

Les âmes 15a et 15b sont réalisées en un matériau métallique présentant une forte déformabilité et de préférence en un matériau métallique présentant un rapport entre la limite élastique et la charge à la rupture inférieur à celui du matériau métallique des semelles 11a et 11b et inférieur à 0,9.

Selon un premier mode de réalisation, les semelles 11a et 11b sont réalisées en un matériau métallique identique et présentant des épaisseurs différentes.

Selon un autre mode de réalisation, le matériau métallique de la semelle avant 11a présente un rapport entre la limite élastique et la charge à la rupture inférieur à celui du matériau métallique de la semelle arrière 11b.

Chaque âme 15a et 15b comporte, dans la partie centrale A, une succession de parties en saillie 16a et en creux 16b alternées et s'étendant perpendiculairement à la direction longitudinale de l'âme correspondante.

D'une manière générale, les âmes 15a et 15b ont une forme qui permet de réduire leurs épaisseurs en préservant leur résistance au flambement et ces âmes présentent une certaine ductilité et de préférence un rapport entre la limite élastique et la charge à la rupture inférieur à 0.9. Les parties en saillie 16a et en creux 16b présentent une périodicité adaptée pour optimiser le comportement de ces âmes et de la poutre.

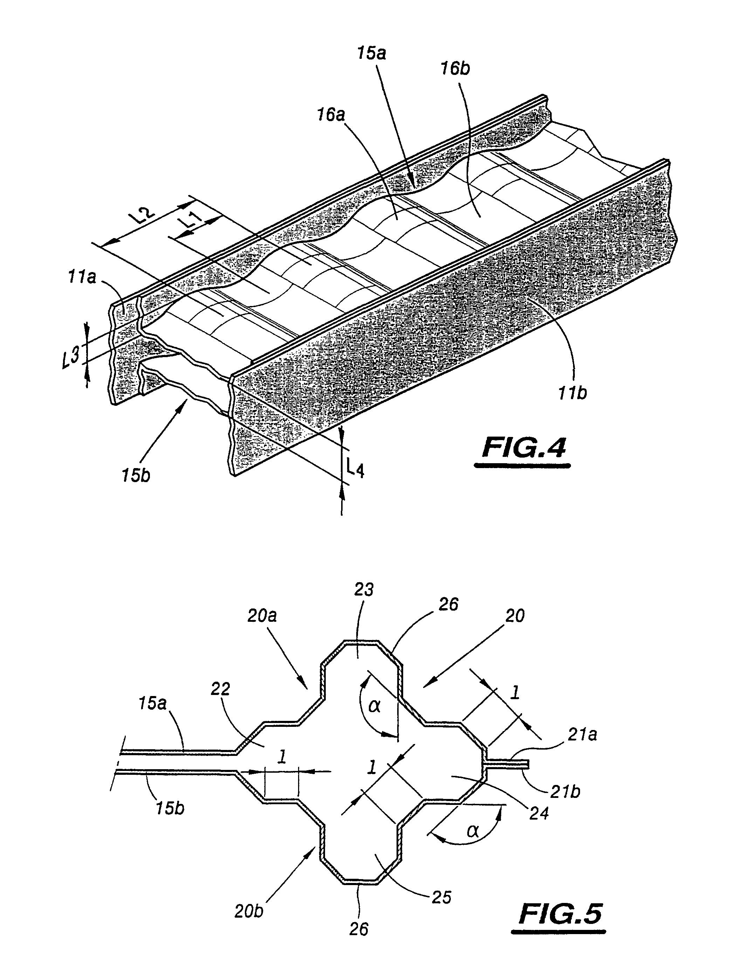

Selon un mode de réalisation préférentiel, représenté plus particulièrement à la figure 4, la périodicité L2 des parties en saillie 16a et en creux 16b est uniforme sur toute la longueur de chaque âme 15a et 15b.

De plus, la distance L1 entre l'axe d'une partie en saillie 16a et l'axe d'une partie en creux 16b est égale à la moitié de la périodicité L2 et la distance L3 entre le sommet des parties en saillie 16a et le fond des parties en creux de chaque âme 15a et 15b est comprise entre 1/20^{ème} et la moitié de la périodicité L1 desdites parties en saillie ou en creux.

Par ailleurs, la distance L4 entre le fond des parties en creux 16b des deux âmes 15a et 15b est comprise entre 0 et la moitié de la périodicité L1 desdites parties en saillie ou en creux.

Selon un autre mode de réalisation, les parties en saillie 16a et en creux 16b d'une âme 15a sont décalées par rapport aux parties en saillie 16a et en creux 16b de l'autre âme 15a si bien qu'un point bas d'une âme se trouve en face d'un point haut de l'autre âme de sorte que la distance entre les âmes 15a et 15b est constante.

Dans le mode réalisation représenté sur les figures, les parties en saillie 16a et en creux 16b sont formées par des ondulations. Elles peuvent également être formées par des nervures et ces parties en saillie 16a et en creux 16b sont réalisées par déformation du métal et permettent de réduire sensiblement l'épaisseur des âmes 15a et 15b, à charge de flambement et de voilement égale.

Les parties en saillie 16a peuvent également être formées par des crevés ou par des découpes à bords rabattus.

Les parties latérales B de la poutre 10 disposées de part et d'autre de la partie centrale A de ladite poutre 10 constituent chacune un absorbeur d'énergie formé par un corps creux 20 en matériau métallique et s'étendant perpendiculairement aux semelles 11a et 11b.

Le matériau métallique constituant le corps creux 20 de chaque absorbeur d'énergie présente un rapport entre la limite élastique et la charge à la rupture inférieur à celui du matériau métallique des semelles 11a et 11b et inférieur à 0,9.

Selon un mode de réalisation préférentiel, représenté sur les figures 3 et 5, chaque corps creux 20 constituant un absorbeur d'énergie est formé par deux demi-corps creux, respectivement 20a et 20b, symétriques prolongeant chacun une âme, respectivement 15a et 15b.

Les deux demi-corps creux 20a et 20b sont reliés entre eux au niveau de leurs bords libres, respectivement 21a et 21b par exemple par une soudure par points ou par une soudure continue ou par sertissage ou à l'aide d'un adhésif approprié ou par emboîtement local ou encore par ourlet.

En se reportant à la figure 5, on va décrire un corps creux 20 d'un absorbeur d'énergie, le corps creux de l'autre absorbeur d'énergie étant identique.

Le corps creux 20 présente une section transversale en forme de croix à quatre branches, respectivement 22,23,24 et 25, s'étendant deux par deux dans le prolongement l'une de l'autre et formant entre elles un angle de 90°. La paroi du corps creux 20 est formée par une succession de facettes 26 de largeur "1" identique et formant les unes avec les autres un angle α de 135°. Le nombre de facettes 26 du corps creux 20 est égal à vingt-quatre.

Par ailleurs, le corps creux 20 de chaque absorbeur d'énergie est ouvert sur un de ses côtés et, dans l'exemple de réalisation représenté sur les figures, le corps creux 20 comporte une ouverture 29 disposée du côté de la partie centrale de la poutre 10.

Selon une variante, le corps creux 20 de chaque absorbeur d'énergie est fermé sur toute sa périphérie.

D'une manière générale, le corps creux 20 de chaque absorbeur d'énergie est relié à au moins la semelle avant 11a ou à l'âme dans le cas où la poutre comporte une seule âme ou aux deux âmes dans le cas où la poutre comporte deux âmes, respectivement 15a et 15b.

La liaison entre chaque absorbeur d'énergie et la semelle avant 11a ou les âmes 15a et 15b peut être réalisée de différentes manières.

Selon un premier mode de réalisation, le corps creux 20 de chaque absorbeur d'énergie comporte une première extrémité 27 reliée à la semelle avant 11a par exemple par soudage, sertissage, emboîtement local ou ourlet et une seconde extrémité 28 en appui sur un longeron 3 de la structure du véhicule automobile et traversant librement la semelle arrière 11b par un orifice 30 présentant un contour de forme complémentaire à la section dudit corps creux 20, ainsi que représenté à la figure 3.

Selon un deuxième mode de réalisation, le corps creux 20 de chaque absorbeur d'énergie comporte une première extrémité 27 en appui sur la semelle avant 11a et une seconde extrémité 28 en appui sur un longeron 3 de la structure du véhicule automobile. Dans ce mode de réalisation, cette seconde extrémité 28 traverse la semelle arrière 11b par un orifice 30 présentant un contour de forme complémentaire à la section dudit corps creux 20 et le corps creux 20 est relié à la semelle arrière 11b par exemple par soudage, par sertissage, par emboîtement local ou par ourlet.

Selon un troisième mode de réalisation, le corps 20 de chaque absorbeur d'énergie comporte une première extrémité 27 en appui sur la semelle avant 11a et une seconde extrémité 28 reliée à la semelle arrière 11b par exemple par soudage, sertissage, emboîtement local ou ourlet. Dans ce cas, le corps creux 20 de chaque absorbeur d'énergie ne dépasse pas la semelle arrière 11b et cette semelle arrière 11b est en appui sur un longeron 3 de la structure du véhicule automobile.

Selon un autre mode de réalisation, le corps creux 20 de chaque absorbeur d'énergie est en appui sur la semelle avant 11a et est relié à l'âme 15a ou 15b ou aux deux âmes 15a et 15b.

Selon encore un autre mode de réalisation, le corps creux 20 de chaque absorbeur d'énergie est relié à la semelle avant 11a par exemple par soudage, par sertissage, par emboîtement local ou par ourlet et est également relié à l'âme 15a ou 15b dans le cas où la poutre 10 ne comporte qu'une seule âme ou est relié aux deux âmes 15a et 15b dans le cas où la poutre 10 comporte deux âmes 15a et 15b.

D'une manière générale, le corps creux 20 de chaque absorbeur d'énergie peut être formé par une pièce indépendante fixée sur les extrémités de la ou des âmes 15a et 15b par soudage, par sertissage ou par roulage des bords en regard ou par ourlet ou par emboîtement local.

Selon une variante, le corps creux 20 de chaque absorbeur d'énergie peut être réalisé sous la forme d'un corps fermé venu de matière avec les âmes 15a et 15b ou fixé sur lesdites âmes 15a et 15b.

Le matériau métallique du corps creux 20 de chaque absorbeur d'énergie présente une épaisseur inférieure de préférence à 1,2mm.

Chaque âme 15a et 15b comporte sur son bord longitudinal en regard de la semelle avant 11a, un rebord 17 de fixation sur ladite semelle avant 11a et s'étendant sur toute la longueur de chaque âme 15a et 15b.

De même, chaque âme 15a et 15b comporte sur son bord longitudinal en regard de la semelle arrière 11b, un rebord 18 de fixation sur ladite semelle arrière 11b et s'étendant uniquement sur la longueur de la partie centrale de chaque âme 15a et 15b.

L'assemblage des semelles 11a et 11b avec les âmes 15a et 15b peut être réalisé par des procédés d'assemblage classiques, de type soudure ou de type mécanique.

Dans le cas d'une soudure, cette soudure peut être une soudure par points ou une soudure continue par faisceau laser.

Cependant, les longueurs des zones à solidariser sont grandes, plus particulièrement dans la zone centrale A ce qui pénalise sensiblement le prix de revient lors d'un assemblage par soudure.

Les techniques d'assemblage mécanique sont telles que la déformation par emboîtement local permet de réaliser simultanément un grand nombre de points par exemple sur une presse. Cependant, ce type d'assemblage pose des problèmes du fait des hautes caractéristiques mécaniques du matériau métallique constituant les semelles 11a et 11b.

L'assemblage de type sertissage est obtenu en formant par exemple un ourlet réalisé en roulant simultanément les bords longitudinaux des semelles 11a et 11b avec les bords longitudinaux 17 et 18 des âmes 15a et 15b.

Ce type d'assemblage peut être réalisé en une seule opération et présente un avantage technique du fait que la forme cylindrique des zones roulées contribue à renforcer mécaniquement la poutre 10.

Enfin, la semelle externe 11a comporte au niveau des parties latérales B et des parties d'extrémité C des rebords horizontaux 31 qui recouvrent le corps 20 de chaque absorbeur d'énergie et vient en appui sur le bord de la semelle interne 11b dans lesdites zones B et C.

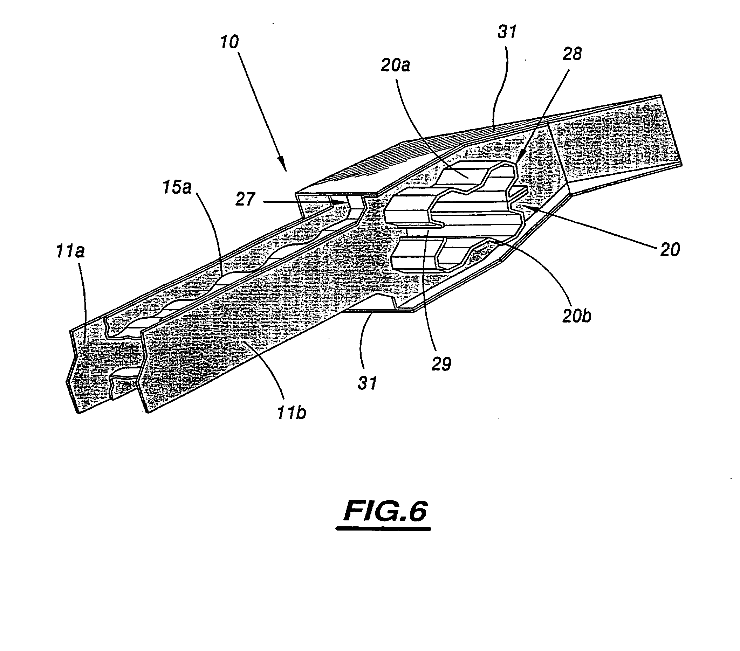

Sur la figure 6, on a représenté une variante de réalisation de l'absorbeur d'énergie.

Dans ce mode de réalisation, chaque absorbeur d'énergie est constitué par un corps creux 20 formé par une croix à quatre branches , respectivement 22,23,24 et 25.Dans ce cas, la croix est inclinée de façon à former un "X". Le corps creux 20 peut également comporter une ouverture 29 disposée du côté de la partie centrale A de la poutre 10.

L'utilisation d'un acier à hautes caractéristiques mécaniques pour les semelles 11a et 11b en combinaison avec un acier plus ductile pour les âmes 15a et 15b afin de réaliser une structure combinant les fonctions - poutre et absorbeur - en une seule pièce, permet de réduire le poids, ainsi que les coûts pour réaliser un pare-chocs comportant une telle poutre et d'optimiser le comportement, notamment en garantissant une course de fonctionnement optimale des absorbeurs d'énergie.

L'utilisation d'un acier à haute limite élastique permet de réduire le poids et la combinaison avec un acier plus ductile permet de réaliser une seule pièce de forme complexe malgré les capacités de déformation limitées des aciers à haute limite élastique.

La zone centrale A assure une fonction de préservation du véhicule sans dégât apparent pour des chocs à faible vitesse et une fonction de répartition et de transmission des efforts de contact aux zones latérales B constituant les absorbeurs d'énergie et ensuite aux longerons 3 pour des chocs à plus haute vitesse.

Une telle structure permet d'optimiser le poids de la poutre 10, car l'acier à haute limite élastique des semelles 11a et 11b autorise un niveau élevé de contrainte avant l'entrée dans la phase plastique et avant l'apparition de déformations permanentes. La combinaison avec un acier ductile pour les âmes 15a et 15b permet de réaliser dans ces âmes, par exemple par emboutissage, des parties en saillie et en creux comme par exemple des ondulations ou des nervures qui permettent d'améliorer sensiblement la résistance desdites âmes 15a et 15b au voilement et donc d'en réduire le poids à résistance égale.

L'assemblage par ourlet des différents éléments de la poutre présente des avantages. En effet, il est compatible avec les aciers à très hautes caractéristiques mécaniques. Ces aciers présentent un rayon limite de pliage valant plusieurs fois l'épaisseur du métal et le sertissage implique des rayons de pliage de l'ordre de l'épaisseur du métal alors que le rayon d'assemblage par ourlet peut être adapté et choisi. Ce rayon peut être par exemple égal à 4 à 5 fois l'épaisseur de l'acier à très hautes caractéristiques.

Par rapport au procédé de soudage, l'assemblage par ourlet présente également l'avantage d'une très grande productivité et de plus il est facile à réaliser, en une seule opération de presse avec un outil adapté.

L'assemblage par ourlet présente une excellente résistance dans le plan perpendiculaire à l'axe de l'ourlet. Pour certains niveaux de sollicitation et pour éviter un glissement relatif selon l'axe de l'ourlet, c'est à dire entre l'âme et la semelle, on peut interposer une colle entre les deux éléments au niveau de l'ourlet ou réaliser des soudures par fusion locale ou de préférence écraser localement l'ourlet avec un outil de presse comprenant par exemple un poinçon en forme de V terminé par un arrondi et une enclume plane.

Cette opération peut être réalisée à la presse à une cadence rapide. Un outillage adapté peut réaliser simultanément l'indentation de deux ourlets au moins et le pas d'indentation est de l'ordre de 5 à 10 fois le diamètre extérieur de l'ourlet.

Pour s'inscrire dans la géométrie du véhicule, la forme globale des semelles 11a et 11b présente un galbe léger, compatible avec la faible formabilité des aciers à haute limite élastique. Ces pièces peuvent être réalisées par exemple par pliage.

La forme des âmes 15a et 15b est plus complexe, mais elle est compatible avec l'aptitude au formage de l'acier choisi pour les réaliser.

Ainsi, cette combinaison de matériaux permet donc de réaliser une forme complexe répondant aux exigences esthétiques des véhicules automobiles.

La poutre 10 peut être enrobée d'une matière synthétique 32 (Fig. 1) qui assure un rôle de coussin lors des chocs à faible vitesse et constitue la peau extérieure du pare-chocs donnant ainsi à la pièce l'apparence des pare-chocs d'usage courant.

Le rôle du coussin en matière synthétique associé à la structure en acier est déterminant pour les chocs à faible vitesse par exemple contre un mur ou contre un poteau.

En se déformant élastiquement, la matière synthétique permet de répartir la pression de contact sur la poutre 10 et de réduire l'effort lors des chocs à faible vitesse.

Cette matière synthétique absorbe l'énergie cinétique du véhicule par déformation élastique. La matière synthétique utilisée peut être formée par des mousses synthétiques de caractéristiques mécaniques appropriées, comme par exemple des caoutchoucs cellulaires.

La poutre selon l'invention destinée à former un pare-chocs avant ou arrière de véhicules automobiles permet d'améliorer les performances de ce véhicule en cas de choc frontal et de diminuer les coûts de réparation. Elle présente un haut niveau d'absorption d'énergie et elle permet de réduire le poids et le nombre de pièces par rapport aux structures classiques.

## Revendications

1. Poutre de pare-chocs pour véhicules automobiles comprenant une semelle avant (11a) et une semelle arrière (11b) verticales et réalisées en au moins un matériau métallique, et au moins une âme (15a, 15b) réalisée en matériau métallique et disposée entre les deux semelles (11a, 11b), **caractérisée en ce qu'**elle comprend à chaque extrémité de ladite âme (15a, 15b), un absorbeur d'énergie formé par un corps creux (20) en matériau métallique s'étendant perpendiculairement aux semelles (11a, 11b) et relié à au moins ladite semelle avant (11a) ou à ladite âme (15a, 15b),les matériaux métalliques de cette âme (15a, 15b) et du corps creux (20) des absorbeurs d'énergie présentant un rapport entre la limite élastique et la charge à la rupture inférieur à celui du matériau métallique desdites semelles (11a, 11b) et inférieur à 0.9.

2. Poutre de pare-chocs selon la revendication 1, caractérisée ce que le matériau métallique des semelles (11a, 11b) est en acier présentant une limite élastique très élevée, supérieure à 400 MPa.

3. Poutre de pare-chocs selon la revendication 1, **caractérisée en ce que** le matériau métallique des semelles (11a, 11b) est un aluminium présentant une limite élastique très élevée, supérieure à 250 MPa.

4. Poutre de pare-chocs selon l'une quelconque des revendications précédentes, **caractérisée en ce que** les semelles (11a, 11b) sont réalisées en un matériau métallique identique et présentent des épaisseurs différentes.

5. Poutre de pare-chocs selon l'une quelconque de revendications 1 à 3, **caractérisée en ce que** le matériau métallique de la semelle avant (11a) présente un rapport entre la limite élastique et la charge à la rupture inférieur à celui du matériau métallique de la semelle arrière (11b).

6. Poutre de pare-chocs selon la revendication 1 **caractérisée en ce qu'**elle comporte deux âmes (15a, 15b) parallèles et s'étendant entre lesdites semelles (11a, 11b).

7. Poutre de pare-chocs selon l'une quelconque des revendications précédentes, **caractérisée en ce que** les épaisseurs des semelles (11a, 11b) et des âmes (15a, 15b) sont différentes.

8. Poutre de pare-chocs selon l'une quelconque des revendications 1 à 6, **caractérisée en ce que** l'épaisseur des semelles (11a, 11b) est supérieure à celle des âmes (15a, 15b).

9. Poutre de pare-chocs selon la revendication 1 ou 2, **caractérisée en ce que** ladite âme (15a, 15b) comporte une succession de parties en saillie 16a et en creux 16b alternées et s'étendant perpendiculairement à l'axe longitudinal de cette âme (15a, 15b).

10. Poutre de pare-chocs selon la revendication 9, **caractérisée en ce que** la périodicité des parties en saillies (16a) et en creux (16 b) est uniforme sur toute la longueur de l'âme (15a, 15b) correspondante.

11. Poutre de pare-chocs selon la revendication 9 ou 10, **caractérisée en ce que** les parties en saillie (16a) et en creux (16b) d'une âme (15a) sont décalées par rapport aux parties en saillie (16a) et en creux (16b) de l'autre âme (15b).

12. Poutre de pare-chocs selon l'une quelconque des revendications 9 à 12, **caractérisée en ce que** la distance entre le sommet des parties en saillie (16a) et le fond des parties en creux (16b) de ladite âme (15a, 15b) est comprise entre 1/20^{ème} et la moitié de la périodicité des parties en saillie (16a) ou en creux (16b).

13. Poutre de pare-chocs selon l'une quelconque des revendications 9 à 12, **caractérisée en ce que** la distance entre le fond des parties en creux (16b) des deux âmes (15a,15b) est comprise entre 0 et la moitié de la périodicité desdites parties en saillie (16a) ou en creux (16b).

14. Poutre de pare-chocs selon l'une quelconque des revendications 9 à 13, **caractérisée en ce que** les parties en saillie (16a) sont formées par des crevés ou par des découpes à bords rabattus.

15. Poutre de pare-chocs selon la revendication 1, **caractérisée en ce que** le corps creux (20) de chaque absorbeur d'énergie présente une section transversale en forme de croix à quatre branches (22, 23, 24, 25) s'étendant deux par deux dans le prolongement l'une de l'autre et formant entre elles un angle de 90°.

16. Poutre de pare-chocs selon la revendication 15, caractérisée ce que le corps creux (20) de chaque absorbeur d'énergie est ouvert sur un de ses côtés.

17. Poutre de pare-chocs selon la revendication 15, **caractérisée en ce que** le corps creux (20) de chaque absorbeur d'énergie est fermé sur toute sa périphérie.

18. Poutre de pare-chocs selon l'une quelconque des revendications 15 à 17, **caractérisée en ce que** la paroi du corps creux (20) de chaque absorbeur d'énergie est formée par une succession de facettes (26).

19. Poutre de pare-chocs selon la revendication 18, **caractérisée en ce que** les facettes (26) sont de largeur identique.

20. Poutre de pare-chocs selon la revendication 18 ou 19, **caractérisée en ce que** les facettes (26) sont au nombre de vingt-quatre.

21. Poutre de pare-chocs selon l'une quelconque des revendications 18 à 20, **caractérisée en ce que** les facettes (26) forment entre elles un angle de 135°.

22. Poutre de pare-chocs selon l'une quelconque des revendications précédentes, **caractérisée en ce que** le corps creux (20) de chaque absorbeur d'énergie comporte une première extrémité (27) reliée à la semelle avant (11a) par exemple par soudage, sertissage ou emboîtement local et une seconde extrémité (28) en appui sur un longeron de la structure du véhicule automobile et traversant la semelle arrière (11b) par un orifice (30) présentant un contour de forme complémentaire à la section dudit corps creux (20).

23. Poutre de pare-chocs selon l'une quelconque des revendications 1 à 21, **caractérisée en ce que** le corps creux (20) de chaque absorbeur d'énergie comporte une première extrémité (27) en appui sur la semelle avant (11a) et une seconde extrémité (28) en appui sur un longeron de la structure du véhicule automobile et traversant librement la semelle arrière (11b) par un orifice (30) présentant un contour de forme complémentaire à la section dudit corps creux (20), ce corps creux (20) étant relié à la semelle arrière (11b) par exemple par soudage, sertissage, emboîtement local ou encore par oulet.

24. Poutre de pare-chocs selon l'une quelconque des revendications 1 à 21, **caractérisée en ce que** le corps creux (20) de chaque absorbeur d'énergie comporte une première extrémité (27) en appui sur la semelle avant (11a) et une seconde extrémité (28) reliée à la semelle arrière (11b) par exemple par soudage, sertissage, emboîtement local ou encore par ourlet, ladite semelle (11b) étant en appui sur un longeron de la structure du véhicule automobile.

25. Poutre de pare-chocs selon l'une quelconque des revendications 1 à 21, **caractérisée en ce que** le corps creux (20) de chaque absorbeur d'énergie est en appui sur la semelle avant (11a) et est relié au bord d'extrémité de ladite âme (15a, 15b) par exemple par soudage, sertissage, emboîtement local ou encore par ourlet.

26. Poutre de pare-chocs selon l'une quelconque des revendications 1 à 21, **caractérisée en ce que** le corps creux (20) de chaque absorbeur d'énergie est en appui sur la semelle avant (11a) et est formé de deux demi-corps creux (20a, 20b) symétriques, reliés à ladite âme (15a, 15b) et entre eux au niveau de leurs bords libres (21a, 21b) par exemple par soudage, sertissage, emboîtement local ou encore par ourlet.

27. Poutre de pare-chocs selon l'une quelconque des revendications 1 à 21, **caractérisée en ce que** le corps creux (20) de chaque absorbeur d'énergie est en appui sur la semelle avant (11a) et est formé de deux demi-corps creux (20a, 20b) symétriques prolongeant chacun une âme (15a,15b) les deux demi-corps creux (20a, 20b) étant reliés entre eux au niveau de leurs bords libres par exemple par soudage, sertissage, emboîtement local ou encore par ourlet.

28. Poutre de pare-chocs selon l'une quelconque des revendications 1 ou 15 à 27, **caractérisée en ce que** le matériau métallique du corps creux (20) de chaque absorbeur d'énergie présente une épaisseur inférieure à 1,2 mm.

29. Poutre de pare-chocs selon l'une quelconque des revendications 1à 14 , **caractérisée en ce que** les deux semelles (11a, 11b) et ladite âme (15a, 15b) sont reliées entre elles par exemple par soudage, sertissage, emboîtement local ou encore par ourlet.

30. Poutre de pare-chocs selon l'une quelconque des revendications précédentes, **caractérisée en ce qu'**elle est enrobée de mousse synthétique, comme par exemple un caoutchouc cellulaire.

## Patentansprüche

1. Kraftfahrzeug-Stoßstangenträger mit jeweils einer vertikalen vorderen (11a) und hinteren Platte (11b) aus mindestens einem metallischen Material und mit mindestens einem Mittelteil (15a, 15b) aus einem metallischen Material, der zwischen den beiden Platten (11a, 11b) angeordnet ist, **dadurch gekennzeichnet, dass** er an jedem Ende des Mittelteils (15a, 15b) einen Energieaufhehmer aufweist, der von einem Hohlkörper (20) aus einem metallischen Material gebildet wird, der sich quer zu den Platten (11a, 11b) erstreckt und mit mindestens der Vorderplatte (11a) oder dem Mittelteil (15a, 15b) verbunden ist, wobei die metallischen Materialien dieses Mittelteils (15a, 15b) und des Hohlkörpers (20) der Energieaufnehmer ein Verhältnis zwischen Elastizitätsgrenze und Bruchlast aufweisen, das unter demjenigen des metallischen Materials der Platten (11a, 11b) und unter 0,9 liegt.

2. Stoßstangenträger nach Anspruch 1, **dadurch gekennzeichnet, dass** das metallische Material der Platten (11a, 11b) aus Stahl mit einer sehr hohen Elastizitätsgrenze, und zwar über 400 MPa, besteht.

3. Stoßstangenträger nach Anspruch 1, **dadurch gekennzeichnet, dass** das metallische Material der Platten (11a, 11b) ein Aluminium mit einer sehr hohen Elastizitätsgrenze, und zwar über 250 MPa, ist.

4. Stoßstangenträger nach einem der vorstehenden Ansprüche, **dadurch gekennzeichnet, dass** die Platten (11a, 11b) aus identischem metallischen Material sind und unterschiedliche Dicken aufweisen.

5. Stoßstangenträger nach einem der Ansprüche 1 bis 3, **dadurch gekennzeichnet, dass** das metallische Material der vorderen Platte (11a) ein Verhältnis zwischen Elastizitätsgrenze und Bruchlast aufweist, das unter demjenigen des metallischen Materials der hinteren Platte (11b) liegt.

6. Stoßstangenträger nach Anspruch 1, **dadurch gekennzeichnet, dass** er zwei Mittelteile (15a, 15b) aufweist, die parallel zueinander sind und sich zwischen den Platten (11a, 11b) erstrecken.

7. Stoßstangenträger nach einem der vorstehenden Ansprüche, **dadurch gekennzeichnet, dass** die Dicken der Platten (11a, 11b) und der Mittelteile (15a, 15b) unterschiedlich sind.

8. Stoßstangenträger nach einem der Ansprüche 1 bis 6, **dadurch gekennzeichnet, dass** die Dicke der Platten (11a, 11b) größer ist als diejenige der Mittelteile (15a, 15b).

9. Stoßstangenträger nach Anspruch 1 oder 2, **dadurch gekennzeichnet, dass** der Mittelteil (15a, 15b) eine abwechselnde Folge von herausstehenden Bereichen 16a und vertieften Bereichen 16b umfasst, die sich quer zur Längsachse dieses Mittelteils (15a, 15b) erstrecken.

10. Stoßstangenträger nach Anspruch 9, **dadurch gekennzeichnet, dass** die Periodizität der herausstehenden Bereiche (16a) und der vertieften Bereiche (16b) über die ganze Länge des entsprechenden Mittelteils (15a, 15b) einheitlich ist.

11. Stoßstangenträger nach Anspruch 9 oder 10, **dadurch gekennzeichnet, dass** die herausstehenden Bereiche (16a) und vertieften Bereiche (16b) eines Mittelteils (15a) bezüglich der herausstehenden Bereiche (16a) und vertieften Bereiche (16b) des anderen Mittelteils (15b) versetzt sind.

12. Stoßstangenträger nach einem der Ansprüche 9 bis 12, **dadurch gekennzeichnet, dass** der Abstand zwischen dem Scheitel der herausstehenden Bereiche (16a) und dem Boden der vertieften Bereiche (16b) des Mittelteils (15a, 15b) ein Zwanzigstel bis die Hälfte der Periodizität der herausstehenden (16a) oder vertieften (16b) Bereiche beträgt.

13. Stoßstangenträger nach einem der Ansprüche 9 bis 12, **dadurch gekennzeichnet, dass** der Abstand zwischen dem Boden der vertieften Bereiche (16b) der beiden Mittelteile (15a, 15b) 0 bis die Hälfte der Periodizität der herausstehenden (16a) oder vertieften Bereiche (16b) beträgt.

14. Stoßstangenträger nach einem der Ansprüche 9 bis 13, **dadurch gekennzeichnet, dass** die herausstehenden Bereiche (16a) von Einschnitten oder Ausschnitten mit umgebogenen Rändern besteht.

15. Stoßstangenträger nach Anspruch 1, **dadurch gekennzeichnet, dass** der Hohlkörper (20) jedes Energieaufnehmers einen Querschnitt in Form eines Kreuzes mit vier Armen (22, 23, 24, 25) aufweist, die sich jeweils paarweise in Verlängerung voneinander erstrecken und zueinander einen Winkel von 90° bilden.

16. Stoßstangenträger nach Anspruch 15, **dadurch gekennzeichnet, dass** der Hohlkörper (20) jedes Energieaufhehmers an einer seiner Seiten offen ist.

17. Stoßstangenträger nach Anspruch 15, **dadurch gekennzeichnet, dass** der Hohlkörper (20) jedes Energieaufnehmers auf seinem ganzen Umfang geschlossen ist.

18. Stoßstangenträger nach einem der Ansprüche 15 bis 17, **dadurch gekennzeichnet, dass** die Wand des Hohlkörpers (20) jedes Energieaufnehmers von einer Folge von Schliffflächen (26) gebildet wird.

19. Stoßstangenträger nach Anspruch 18, **dadurch gekennzeichnet, dass** die Schliffflächen (26) eine identische Breite aufweisen.

20. Stoßstangenträger nach Anspruch 18 oder 19, **dadurch gekennzeichnet, dass** die Anzahl der Schliffflächen (26) 24 beträgt.

21. Stoßstangenträger nach einem der Ansprüche 18 bis 20, **dadurch gekennzeichnet, dass** die Schliffflächen (26) zwischen sich einen Winkel von 135° bilden.

22. Stoßstangenträger nach einem der vorstehenden Ansprüche, **dadurch gekennzeichnet, dass** der Hohlkörper (20) jedes Energieaufnehmers ein erstes Ende (27) aufweist, das mit der Vorderplatte (11a) beispielsweise durch Schweißen, Bördeln oder lokales Aufstecken verbunden ist, sowie ein zweites Ende (28), das an einen Längsträger der Karosserie des Kraftfahrzeugs anliegt und durch die hintere Platte (11b) durch eine Offnung (30) geführt ist, die einen Umfang einer Form aufweist, die komplementär zum Querschnitt des Hohlkörpers (20) ist.

23. Stoßstangenträger nach einem der Ansprüche 1 bis 21, **dadurch gekennzeichnet, dass** der Hohlkörper (20) jedes Energieaufhehmers ein erstes Ende (27) aufweist, das an die Vorderplatte (11a) anliegt, sowie ein zweites Ende (28), das an einen Längsträger der Karosserie des Kraftfahrzeugs anliegt und frei durch die hintere Platte (11b) durch eine Öffnung (30) geführt ist, die einen Umfang einer Form aufweist, die komplementär zum Querschnitt des Hohlkörpers (20) ist, wobei dieser Hohlkörper (20) mit der hinteren Platte (11b) beispielsweise durch Schweißen, Bördeln, lokales Aufstecken oder auch Saumverbindung verbunden ist.

24. Stoßstangenträger nach einem der Ansprüche 1 bis 21, **dadurch gekennzeichnet, dass** der Hohlkörper (20) jedes Energieaufnehmers ein erstes Ende (27) aufweist, das an die Vorderplatte (11a) anliegt, sowie ein zweites Ende (28), das beispielsweise durch Schweißen, Bördeln, lokales Aufstecken oder auch Saumverbindung mit der hinteren Platte (11b) verbunden ist, welche hintere Platte (11b) an einen Längsträger der karosserie des Kraftfahrzeugs anliegt.

25. Stoßstangenträger nach einem der Ansprüche 1 bis 21, **dadurch gekennzeichnet, dass** der Hohlkörper (20) jedes Energieaufnehmers an die Vorderplatte (11a) anliegt und mit der Endkante des Mittelteils (15a, 15b) beispielsweise durch Schweißen, Bördeln, lokales Aufstecken oder auch Saumverbindung verbunden ist.

26. Stoßstangenträger nach einem der Ansprüche 1 bis 21, **dadurch gekennzeichnet, dass** der Hohlkörper (20) jedes Energieaufnehmers an die Vorderplatte (11a) anliegt und von zwei bohlen, symmetrischen Halbkörpem (20a, 20b) gebildet wird, die mit dem Mittelteil (15a, 15b) und miteinander in Höhe ihrer freien Ränder (21a, 21b) beispielsweise durch Schweißen, Bördeln, lokales Aufstecken oder auch Saumverbindung verbunden sind.

27. Stoßstangenträger nach einem der Ansprüche 1 bis 21, **dadurch gekennzeichnet, dass** der Hohlkörper (20) jedes Energieaufnehmers an die Vorderplatte (11a) anliegt und von zwei hohlen, symmetrischen Halbkörpem (20a, 20b) gebildet wird, die jeweils einen Mittelteil (15a, 15b) verlängern, wobei die beiden hohlen Halbkörper (20a, 20b) miteinander in Höhe ihrer freien Ränder (21a, 21b) beispielsweise durch Schweißen, Bördeln, lokales Aufstecken oder auch Saumverbindung verbunden sind.

28. Stoßstangenträger nach einem der Ansprüche 1 oder 15 bis 27, **dadurch gekennzeichnet, dass** das metallische Material des Hohlkörpers (20) jedes Energieaufhehmers eine Dicke von unter 1,2 mm aufweist.

29. Stoßstangenträger nach einem der Ansprüche 1 bis 14, **dadurch gekennzeichnet, dass** die beiden Platten (11a, 11b) und der Mittelteil (15a, 15b) miteinander beispielsweise durch Schweißen, Bördeln, lokales Aufstecken oder auch Saumverbindung verbunden sind.

30. Stoßstangenträger nach einem der vorstehenden Ansprüche, **dadurch gekennzeichnet, dass** er in einen synthetischen Schaum wie beispielsweise Zellgummi eingehüllt ist.

## Claims

1. Bumper beam for motorised vehicles consisting of a vertical front base plate (11a) and a vertical rear base plate (11b) made from at least one metal material, and at least one metal web (15a, 15b) and arranged between the two base plates (11a, 11b), **characterised in that** it has at each end of the said web (15a, 15b) an energy absorber formed by a hollow metal body (20) extending perpendicular to the base plates (11a, 11b) and connected to at least the said front base plate (11a) or to the said web (15a, 15b), the metals of this web (15a, 15b) and of the hollow body (20) of the energy absorbers having a ratio between the yield strength and the breaking load lower than that of the metal material of the said base plates (11a, 11b) and below 0.9.

2. Bumper beam according to Claim 1, **characterised in that** the metal material of the base plates (11a, 11b) is steel with a very high yield strength, above 400 MPa.

3. , Bumper beam according to Claim 1, **characterised in that** the metal material of the base plates (11a, 11b) is aluminium with a very high yield strength, above 250 MPa.

4. Bumper beam according to any one of the preceding claims, **characterised in that** the base plates (11a, 11b) are made from an identical metal material and are of different thicknesses.

5. Bumper beam according to any one of the Claims 1 to 3, **characterised in that** the metal material of the front base plate (11a) has a ratio between the yield strength and the breaking load below that of the rear base plate (11b).

6. Bumper beam according to Claim 1, **characterised in that** it has two parallel webs (15a, 15b) which extend between the said base plates (11a, 11b).

7. Bumper beam according to any one of the preceding claims, **characterised in that** the thicknesses of the base plates (11a, 11b) and of the webs (15a, 15b) are different.

8. Bumper beam according to any one of the Claims 1 to 6, **characterised in that** the thicknesses of the base plates (11a, 11b) is greater than that of the webs (15a, 15b)

9. Bumper beam according to Claim 1 or 2, **characterised in that** the said web (15a, 15b) has a series of alternating raised (16a) and lowered (16b) parts which extend perpendicular to the side centreline of this web (15a, 15b).

10. Bumper beam according to Claim 9, **characterised in that** the frequency of the raised parts (16a) and lowered parts (16b) is uniform over the entire length of the relevant web (15a, 15b).

11. Bumper beam according to Claim 9 or 10, **characterised in that** the raised parts (16a) and lowered parts (16b) of one web (15a) are offset in relation to the raised parts (16a) and lowered parts (16b) of the other web (15b).

12. Bumper beam according to any one of the Claims 9 to 12, **characterised in that** the distance between the top of the raised parts (16a) and the bottom of the lowered parts (16b) of the said web (15a, 15b) is between 1/20^{th} and half of the frequency of the raised parts (16a) or lowered parts (16b).

13. Bumper beam according to any one of the Claims 9 to 12, **characterised in that** the distance between the bottom of the lowered parts (16b) of the two webs (15a, 15b) is between 0 end half of the frequency of the said raised parts (16a) or lowered parts (16b).

14. Bumper beam according to any one of the Claims 9 to 13, **characterised in that** the raised parts (16a) are formed by punching or by cut-outs with folded over edges.

15. Bumper beam according to Claim 1, **characterised in that** the hollow body (20) of each energy absorber has a cross-shaped cross section with four arms (22, 23, 24, 25) extending in pairs into the extension, one from the other, and between them forming an angle of 90°.

16. Bumper beam according to Claim 15, **characterised in that** the hollow body (20) of each energy absorber is open on one of its sides.

17. Bumper beam according to Claim 15, **characterised in that** the hollow body (20) of each energy absorber is closed all round its periphery.

18. Bumper beam according to any one of the Claims 15 to 17, **characterised in that** the wall of the hollow body (20) of each energy absorber is formed by a series of facets (26).

19. Bumper beam according to Claim 18, **characterised in that** the facets (26) are identical in width.

20. Bumper beam according to Claim 18 or 19, **characterised in that** there are twenty-four facets (26).

21. Bumper beam according to any one of the Claims 18 to 20, **characterised in that** the facets (26) between them form an angle of 135°.

22. Bumper beam according to any one of the previous claims, **characterised in that** the hollow body (20) of each energy absorber has a first end (27) connected to the front base plate (11a), for example by welding, crimping or local setting in, and a second end (28) supported on a side member of the vehicle structure and going through the rear base plate (11b) through an opening (30), the shape of which is complementary to the section of the said hollow body (20).

23. Bumper beam according to any one of the Claims 1 to 21, **characterised in that** the hollow body (20) of each energy absorber has a first end (27) supported on the front base plate (11a) and a second end (28) supported on a side member of the vehicle structure and going freely through the rear base plate (11b) through an opening (30), the shape of which is complementary to the section of the said hollow body (20), this hollow body (20) being connected to the rear base plate (11b) for example by welding, crimping, local setting in or by hemming.

24. Bumper beam according to any one of the Claims 1 to 21, **characterised in that** the hollow body (20) of each energy absorber has a first end (27) supported on the front base plate (11a) and a second end (28) connected to the rear base plate (11b) for example by welding, crimping, local setting in or by hemming, the said base plate (11b) being supported on a side member of the vehicle structure.

25. Bumper beam according to any one of the Claims 1 to 21, **characterised in that** the hollow body (20) of each energy absorber is supported on the front base plate (11a) and is connected to the end edge of the said web (15a, 15b) for example by welding, crimping, local setting in or by hemming.

26. Bumper beam according to any one of the Claims 1 to 21, **characterised in that** the hollow body (20) of each energy absorber is supported on the front base plate (11a) and is formed of two symmetrical hollow half-bodies (20a, 20b), connected to the said web (15a, 15b) and to each other at the level of their free edges (21a, 21b) for example by welding, crimping, local setting in or by hemming,

27. Bumper beam according to any one of the Claims 1 to 21, **characterised in that** the hollow body (20) of each energy absorber is supported on the front base plate (11a) and is formed of two symmetrical hollow half-bodies (20a, 20b) each extending a web (15a 15b), the two hollow half-bodies (20a, 20b) being connected to each other at the level of their free edges for example by welding, crimping, local setting in or by hemming.

28. Bumper beam according to any one of the Claims 1 or 15 to 27, **characterised in that** the metal material of the hollow body (20) of each energy absorber is less than 1.2 mm thick.

29. Bumper beam according to any one of the Claims 1 to 14, **characterised in that** the two base plates (11a, 11b) and the said web (15a, 15b) are connected to each other for example by welding, crimping, local setting in or by hemming.

30. Bumper beam according to any one of the previous claims, **characterised in that** it is wound round with synthetic foam, such as a cellular rubber for instance.
